# EUROPEAN PATENT APPLICATION

(11) **EP 4 653 985 A1**
(43) Date of publication of application: **26.11.2025**
(21) Application number: 24771066.8
(22) Date of filing: 13.02.2024
(51) Int. Cl.: G06F 1/3287, G06F 1/20, G06F 11/30, G06F 11/32, G06F 11/14, G01K 7/22

(54) **ELECTRONIC DEVICE, AND OPERATION METHOD FOR ELECTRONIC DEVICE**

(30) Priority: 16.03.2023 KR 20230034726; 11.04.2023 KR 20230047731
(71) Applicant: Samsung Electronics Co., Ltd., Suwon-si, Gyeonggi-do 16677 (KR)
(72) Inventor: KIM, Daesoo, Suwon-si Gyeonggi-do 16677 (KR); NAMKUNG, Kyun, Suwon-si Gyeonggi-do 16677 (KR); AN, Hongki, Suwon-si Gyeonggi-do 16677 (KR); JEONG, Jeongsup, Suwon-si Gyeonggi-do 16677 (KR)
(74) Representative: Gulde & Partner
(86) International application number: PCT/KR2024/002039
(87) International publication number: WO 2024/191065

(57) **Abstract**

An operation method for an electronic device is disclosed. The electronic device according to one embodiment of the present disclosure comprises: a first thermistor for measuring the temperature value of a first region of the electronic device; a second thermistor for measuring the temperature value of a second region of the electronic device; and at least one processor which is electrically connected to the first thermistor and the second thermistor and which includes a processing circuit. The at least one processor is configured to: individually and/or commonly obtain a first temperature value from the first thermistor; determine whether the first temperature value is greater than or equal to a first threshold; identify, in response to determining that the first temperature value is greater than or equal to the first threshold, a second temperature value obtained from the second thermistor; determine whether the first temperature value is greater than the second temperature value by a second threshold or greater; shut off, in response to determining that the first temperature value is greater than the second temperature value by the second threshold or greater, a power source of at least one component disposed in the first region; and display a user interface notifying that operation of the electronic device will be suspended. The user interface can include an object for shutting off a power source of the electronic device.

## Description

### [Background Art]

Electronic devices used in contact with the user's body, such as smartphones and wearable devices (e.g., smart watches, true wireless stereo (TWS) devices, etc.), may provide various functions to the user. For example, the electronic devices may provide the functions of providing information regarding health conditions by measuring the heart rate, blood pressure, and activity, the functions of monitoring exercises like running, walking, and cycling to measure the exercise amount and provide related information, calling and texting functions, music playback functions, global positioning system (GPS) functions, payment functions through near field communication (NFC), and camera capturing functions.

Electronic devices, such as smartphones or wearable devices, are used in contact with parts of the user's body, and abnormal heat generation may occur in the electronic device, potentially causing harm to the user's body. In order to monitor abnormal heat generation, the electronic device may include a sensor for detecting the temperature to obtain information regarding the temperature inside the electronic device.

### [Disclosure of Invention]

### [Solution to Problems]

Embodiments of the disclosure provide an electronic device and a method for operating the electronic device to provide a user interface that informs the user that the heat generation is abnormal by monitoring the heat generation occurring in a component of the electronic device.

There are also provided an electronic device and a method for operating the electronic device to determine whether the heat generation of the electronic device is abnormal using a plurality of thermistors.

There are also provided an electronic device and a method for operating the electronic device to cut off power to the electronic device regardless of a user input regarding whether to cut off power to the electronic device.

An electronic device according to an embodiment of the disclosure may comprise a first thermistor measuring a temperature of a first area of the electronic device. The electronic device according to an embodiment may comprise a second thermistor measuring a temperature of a second area of the electronic device. The electronic device according to an embodiment may comprise at least one processor electrically connected to the first thermistor and the second thermistor and including a processing circuit. The at least one processor according to an embodiment may individually and/or collectively obtain a first temperature value from the first thermistor. The at least one processor according to an embodiment may individually and/or collectively determine whether the first temperature value is a first threshold or more. The at least one processor according to an embodiment may individually and/or collectively identify a second temperature value obtained from the second thermistor in response to determining that the first temperature value is the first threshold or more. The at least one processor according to an embodiment may individually and/or collectively determine whether the first temperature value is larger than the second temperature value by a second threshold or more. The at least one processor according to an embodiment may individually and/or collectively cut off power or a specific function of at least one component disposed in the first area in response to determining that the first temperature value is larger than the second temperature value by the second threshold or more. The at least one processor according to an embodiment may individually and/or collectively display a user interface indicating that an operation of the electronic device is to be stopped. In an embodiment, the user interface may include an object for cutting off power to the electronic device.

A method for operating an electronic device according to an embodiment of the disclosure may comprise obtaining a first temperature value from a first thermistor measuring a temperature of a first area of the electronic device. The operation method of the electronic device according to an embodiment may comprise determining whether the first temperature value is a first threshold or more. The operation method of the electronic device according to an embodiment may comprise identifying a second temperature value obtained from a second thermistor measuring a temperature of a second area of the electronic device in response to determining that the first temperature value is the first threshold or more. The operation method of the electronic device according to an embodiment may comprise determining whether the first temperature value is larger than the second temperature value by a second threshold or more. The operation method of the electronic device according to an embodiment may comprise cutting off power or a specific function of at least one component disposed in the first area in response to determining that the first temperature value is larger than the second temperature value by the second threshold or more. The operation method of the electronic device according to an embodiment may comprise displaying a user interface indicating that an operation of the electronic device is to be stopped. In an embodiment, the user interface may include an object for cutting off power to the electronic device.

An electronic device according to an embodiment of the disclosure may comprise a processor and memory. The memory stores at least one instruction that, when executed by the processor, causes the electronic device to perform at least one operation. The at least one operation may comprise obtaining a first temperature value from a first thermistor measuring a temperature of a first area of the electronic device. The at least one operation may comprise determining whether the first temperature value is a first threshold or more. The at least one operation may comprise identifying a second temperature value obtained from a second thermistor measuring a temperature of a second area of the electronic device in response to determining that the first temperature value is the first threshold or more. The at least one operation may comprise determining whether the first temperature value is larger than the second temperature value by a second threshold or more. The at least one operation may comprise cutting off power or a specific function of at least one component disposed in the first area in response to determining that the first temperature value is larger than the second temperature value by the second threshold or more. The at least one operation may comprise displaying a user interface indicating that an operation of the electronic device is to be stopped. The user interface may include an object for cutting off power to the electronic device.

According to the examples disclosed in the disclosure, it is possible to manage abnormal heat generation caused by physical damage to a component of the electronic device (e.g., corrosion caused by seawater, sweat, cosmetics, etc.).

It is also possible to, when a component mounted on the electronic device operates abnormally, provide the user of the electronic device (e.g., smart watch, smart phone) with related information.

Effects obtainable from the disclosure are not limited to the above-mentioned effects, and other effects not mentioned may be apparent to one of ordinary skill in the art from the following description.

### [Brief Description of Drawings]

FIG. 1 is a block diagram illustrating a configuration of an electronic device according to an embodiment;
FIG. 2 illustrates an example of a process of displaying a user interface of an electronic device according to an embodiment.
FIG. 3 illustrates an operation flow of an electronic device according to an embodiment;
FIG. 4 illustrates an operation flow of an electronic device according to an embodiment;
FIG. 5 illustrates an operation flow for cutting off power to an electronic device according to an embodiment;
FIG. 6 illustrates an example of a user interface displayed on an electronic device according to an embodiment;
FIG. 7 illustrates an example of a user interface displayed on an electronic device according to an embodiment; and
FIG. 8 illustrates an example of a user interface displayed on an external electronic device according to an embodiment.

In connection with the description of the drawings, the same or similar reference numerals may be used to denote the same or similar elements.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

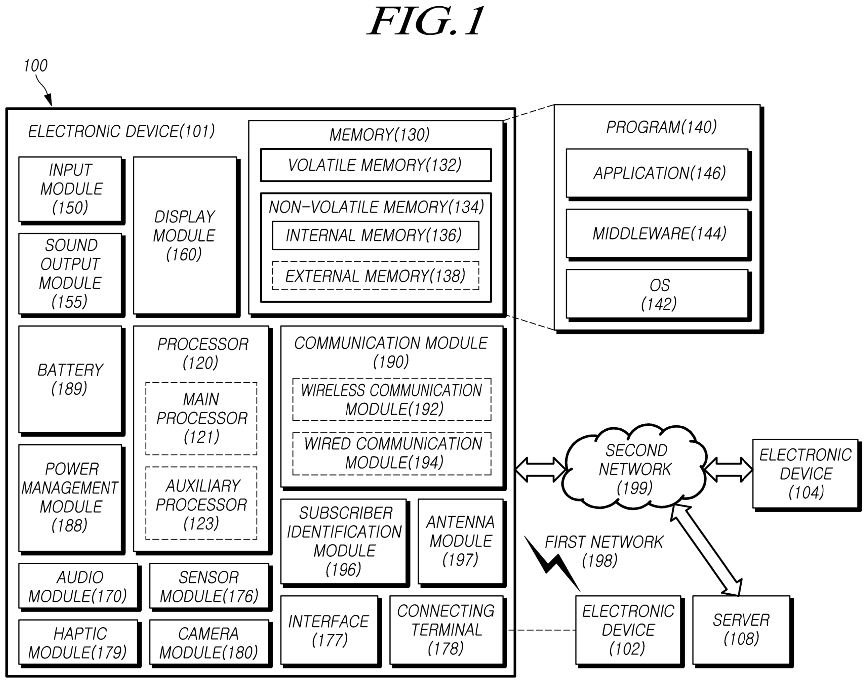

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

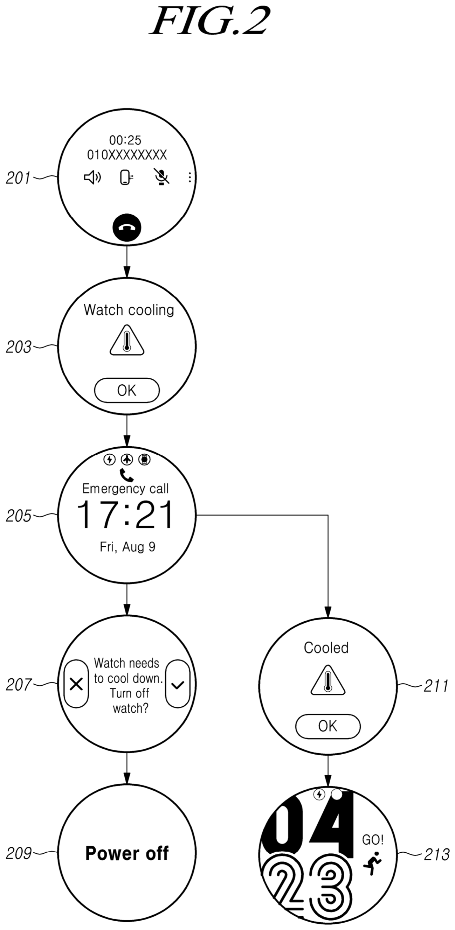

FIG. 2 illustrates an example of a process of displaying a user interface of an electronic device according to an embodiment. The electronic device of FIG. 2 may include a device corresponding to the electronic device 101 of FIG. 1.

FIG. 2 illustrates an example of a user interface displayed when an electronic device identifies a malfunction or a heat generation state above a certain level in an internal component of the electronic device. In the following description, the electronic device is described as a smart watch as an example, but this is merely an example, and the description may be applied to other types of electronic devices (e.g., smart phones, true wireless stereo (TWS) devices, smart glasses (e.g., augmented reality (AR) glasses), smart rings, and head mounted devices).

The user interface 201 according to an embodiment may include a user interface displayed on the electronic device while the power is turned on. For example, the user interface 201 may include a user interface displayed when the user is on the phone. The user interface 201 is an example and may include a user interface displayed when the user makes a call through the electronic device, as well as when an application installed on the electronic device is running, a user interface representing the home screen of the electronic device, and/or a user interface representing the lock screen of the electronic device.

In an embodiment, the electronic device may monitor a heat generation state of the electronic device. For example, the electronic device may monitor the heat generation state of the electronic device based on temperature information identified from a plurality of thermistors included in the electronic device. The thermistor is a component of the electronic device and may perform temperature measurement of the electronic device. The thermistor is configured as an element of which resistance changes electrically, and may be used to measure the temperature of an area adjacent to an internal component of the electronic device.

In an embodiment, the electronic device may include a plurality of thermistors. For example, the electronic device may include an application processor (AP) thermistor for identifying temperature information of an adjacent area of an AP (e.g., the processor 120). For example, the electronic device may include a battery thermistor for identifying temperature information of a battery (e.g., the battery 189). For example, the electronic device may include a power management module thermistor for identifying temperature information of a power management module (e.g., the power management module 188). For example, the electronic device may include a blanket thermistor for identifying temperature information of a heart rate monitor (HRM) module. For example, the electronic device may include a thermal management unit (TMU) thermistor for identifying temperature information inside the AP (e.g., the processor 120). Further, a thermistor for identifying temperature information of internal components (e.g., the communication module 190) of the electronic device may be included.

In an embodiment, the plurality of thermistors may be disposed in a plurality of areas of the electronic device. For example, the AP thermistor may be disposed in an area adjacent to the AP. For example, the battery thermistor may be disposed in an area adjacent to the battery. For example, the power management module thermistor may be disposed in an area adjacent to the power management module. For example, the blanket thermistor may be disposed in an area adjacent to the HRM module. For example, the TMU thermistor may be disposed inside the AP or in an area adjacent to the AP.

In an embodiment, the electronic device may include a sensor module. The sensor module may include a component for generating an electrical signal or data value corresponding to an operation state inside the electronic device or an external environmental state. For example, the electronic device may include a heart rate monitor (HRM) module. The HRM module may include a component used to measure the heart rate of the user wearing the electronic device. Since the HRM module is a component for identifying information about the user's body or external environment, it may be disposed on one surface of the electronic device (e.g., in the case of a smart watch, the surface in contact with the user's wrist). The HRM module may obtain information about the user's body or external environment through a window formed on the one surface of the electronic device.

In an embodiment, the plurality of thermistors included in the electronic device may periodically transmit the identified temperature information to the processor (e.g., the processor 120) of the electronic device. The period at which the thermistor transmits the temperature information may be set differently according to the operation state of the electronic device. For example, the electronic devices may determine the temperature information reception period for each thermistor based on random access memory (RAM) usage, the data rate of the communication module, display screen brightness or scan rate, and/or the type of the running application.

The user interface 203 according to an embodiment may include a user interface displayed when the electronic device determines that the temperature of the electronic device is out of a normal range. The electronic device may determine that the temperature of the electronic device is out of the normal range based on the temperature information identified from the plurality of thermistors. An example in which the electronic device determines whether the temperature of the electronic device is within the normal range based on the temperature information identified from the plurality of thermistors is described below in detail.

In an embodiment, when the electronic device determines that the temperature of the electronic device is out of the normal range, the electronic device may perform at least one operation for reducing the temperature of the electronic device. For example, the electronic device may reduce the brightness of the screen of the electronic device. For example, the electronic device may deactivate the communication function (e.g., Bluetooth and near field communication (NFC)) activated in the electronic device. For example, the electronic device may terminate an application determined to be unnecessary among applications running on the electronic device. For example, the RAM usage of the electronic device may be decreased. For example, the electronic device may reduce the number of colors displayed on the display of the electronic device. For example, the electronic device may reduce the size of the screen output area of the electronic device.

In an embodiment, a user interface 203 may include information indicating that at least one function for lowering the temperature has been executed in the electronic device. For example, referring to FIG. 2, the user interface 203 may include information indicating that the speed (or performance) of the electronic device may decrease because at least one function for lowering the temperature has been performed.

The user interface 205 according to an embodiment may include a user interface displayed as at least one function for lowering the temperature is executed. For example, referring to the user interface 205 of FIG. 2, in order to reduce the number of colors displayed on the display of the electronic device, it may be displayed as a black and white screen. For example, the electronic device may deactivate a wireless communication function using a cellular network, a short-range wireless communication function (e.g., Wi-Fi, Bluetooth), a location tracking function (e.g., a global positioning system (GPS)), and display an icon (e.g., an "airplane mode" icon) indicating that the functions have been deactivated.

The user interface 207 according to an embodiment may include a user interface displayed when determining that the temperature of the electronic device is not within the normal range even though the at least one function is executed. When the temperature does not return to the normal range even though the function for lowering the temperature is performed, the electronic device may cut off power to the electronic device to lower the temperature.

In an embodiment, a user interface 207 may include an object for identifying a user input regarding whether to cut off power to the electronic device. When the electronic device identifies a user input indicating that the power should not be cut off, the electronic device may continue to operate without turning off the power. When the electronic device identifies a user input to cut off the power, the electronic device may display a user interface 209 and cut off the power. The user interface 209 may include information indicating that the power is cut off.

Although not illustrated in FIG. 2, even if the electronic device does not identify a user input regarding whether to cut off power to the electronic device, the electronic device may display a user interface (e.g., the user interface 209) including information indicating that the power to the electronic device is cut off after a predetermined time. For example, when the reason for the temperature of the electronic device exceeding the normal range is not merely due to high power consumption of the electronic device, but rather due to damage to internal components of the electronic device (e.g., corrosion caused by seawater or sweat, or corrosion due to cosmetics), simply turning off the power to the electronic device may not reduce the temperature. In such a situation, when the user may not perceive the state of the electronic device and continues to use the electronic device, sudden heat generation may cause harm to the user's body. Accordingly, when the electronic device determines that the components inside the electronic device are not normal, the power to the electronic device may be forcibly cut off after a predetermined time (e.g., 30s) without considering user input.

The user interface 211 according to an embodiment may include a user interface displayed when determining that the temperature of the electronic device is within the normal range as a result of executing the at least one function. The user interface 211 may include information indicating that normal use is possible since the temperature of the electronic device has returned to the normal range.

The user interface 213 according to an embodiment may include a user interface representing the normal operation state.

As described above in the description of the user interface 203, the electronic device may perform at least one function for lowering the temperature or cut off power in response to identifying a user input regarding whether to perform at least one function for lowering the temperature of the electronic device. However, when there is a problem with an internal component of the electronic device, such as when there is physical damage to the internal component of the electronic device, the electronic device needs to cut off the power regardless of user input. For example, while the user wears and uses a smart watch, components such as sweat, seawater, and other cosmetics may reduce the waterproof function of the window of the HRM module. Accordingly, when the HRM module is submerged, a short circuit may occur in the power supply terminal of the HRM module or the capacitor at the power supply terminal. When a short circuit occurs in the capacitor of the HRM module, an unexpected current may flow due to the short circuit, and components around the capacitor of the power supply terminal may be overloaded by the current flow, thereby generating heat. Such heat generation leads to an abrupt temperature change. Thus, preventing an accident solely by relying on a user interface which prompts a user input for cutting off the power or cooling down such as the user interface 203 may be limited, and cutting off the power to prevent the user from using it may be a preferable method for avoiding accidents.

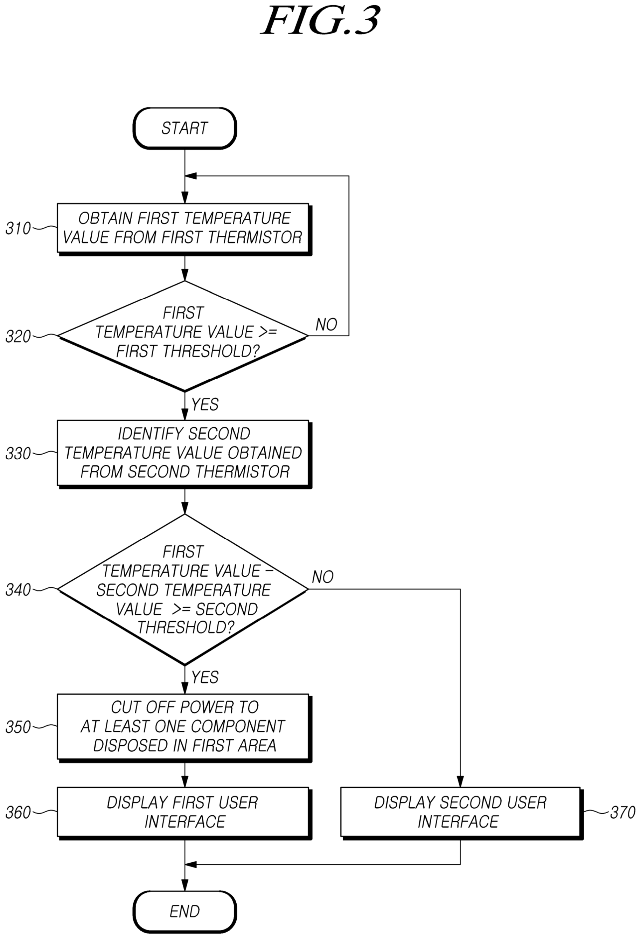

FIG. 3 illustrates an operation flow of an electronic device according to an embodiment. The electronic device of FIG. 3 may include a device corresponding to the electronic device 101 of FIG. 1 and the electronic device of FIG. 2. Among the contents described with reference to FIG. 3, the description of contents overlapping the contents described with reference to FIGS. 1 and 2 may be omitted.

According to an embodiment, in operation 310, the electronic device may obtain a first temperature value from the first thermistor. The electronic device may obtain a temperature value from each of the plurality of thermistors. The first thermistor may include any one of the plurality of thermistors. The plurality of thermistors may include, e.g., at least two of the AP thermistor, the battery thermistor, the power management module thermistor, the blanket thermistor, the TMU thermistor, and other thermistors illustrated in FIG. 2.

In an embodiment, the plurality of thermistors may transmit information regarding the temperature of the area in which the plurality of thermistors are disposed to the processor of the electronic device. In other words, the electronic device may identify the temperature of the area in which the plurality of thermistors are disposed based on the temperature value obtained from the plurality of thermistors. In an embodiment, the first thermistor may be disposed in the first area. When the user wears the electronic device, the first area may include a partial area adjacent to a portion that may contact the user's body. For example, in the case of a smart watch, the portion in contact with the user's wrist is the rear portion where the HRM module is disposed, so that the first area may include an area adjacent to the HRM module. Accordingly, the first thermistor may measure temperature information of the area adjacent to the HRM module.

In an embodiment, the plurality of thermistors may periodically transmit information about the temperature to a processor. The periods at which the plurality of thermistors transmit temperature information may be different from each other. For example, the blanket thermistor which measure the temperature information of the area where the HRM module is disposed may transmit the temperature information in a period shorter than the period when the AP thermistor transmits the temperature information to the processor.

According to an embodiment, in operation 320, the electronic device may determine whether the first temperature value is equal to or larger than a first threshold. Operation 320 may include an operation for identifying whether the electronic device detects a high temperature larger than or equal to a normal range. The first threshold may mean a reference value for determining whether the temperature of the electronic device is in a high temperature state out of the normal range. The first threshold may be different according to the user's input or system setting. The first threshold may have a different value according to the type of thermistor. For example, the first threshold may have a value of 55 degrees Celsius.

In an embodiment, when determining that the first temperature value is larger than or equal to the first threshold, the electronic device may perform operation 330. In other words, the electronic device may determine that the electronic device is out of the normal range and is in the high temperature state, and may perform the next operation to determine whether the high temperature state of the electronic device is due to physical damage to an internal component of the electronic device.

In an embodiment, when determining that the first temperature value is smaller than the first threshold, the electronic device may perform operation 310 again. In other words, when determining that the first temperature value is smaller than the first threshold, it may be determined that the temperature is normal and the temperature of the electronic device may be monitored again.

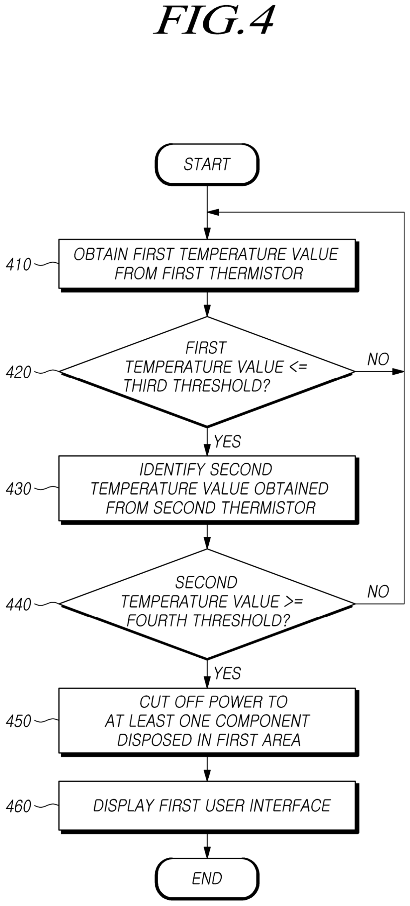

In an embodiment, although not illustrated in the drawings, when determining that the first temperature value is smaller than the first threshold, the electronic device may determine whether the first temperature value is smaller than or equal to a third threshold. This is described in detail in the description of FIG. 4.

According to an embodiment, in operation 330, the electronic device may identify the second temperature value obtained from the second thermistor. The second thermistor may include any one thermistor other than the first thermistor among the plurality of thermistors included in the electronic device. For example, the second thermistor may include an AP thermistor.

In an embodiment, the second temperature value may include temperature information obtained from the second thermistor at a time closest to the time when the first temperature value is obtained. For example, the second temperature value may include a value obtained before the time when the first thermistor measures the first temperature value. For example, the second temperature value may include a value obtained after the time when the first temperature value is obtained.

In an embodiment, the second temperature value may include an average of temperature values obtained from the second thermistor within a predetermined time interval from the time when the first temperature value is obtained.

According to an embodiment, in operation 340, the electronic device may determine whether the first temperature value is larger than or equal to a second threshold. The electronic device may determine whether a difference between the first temperature value and the second temperature value is larger than or equal to a predetermined value. Operation 340 may include an operation for determining whether a temperature difference between a thermistor where a high temperature is detected and another thermistor is larger than or equal to the normal range. There may be a difference in temperature value measured between thermistors, but when the difference is larger than a predetermined value, the electronic device may determine that at least one of thermistors has a problem and perform the next operation. For example, the second threshold may have a value of 6 degrees Celsius.

In an embodiment, when determining that the first temperature value is larger than or equal to the second threshold, operation 350 may be performed. If the first temperature value has a value of 56 degrees and the second temperature value has a value of 49 degrees, the electronic device may perform operation 350 because the difference between the first and second temperature values is 7 degrees, which is larger than the second threshold of 6 degrees.

In an embodiment, when determining that the first temperature value is not larger than the second temperature value by the second threshold or more, operation 370 may be performed. For example, when the first temperature value has a value of 56 degrees and the second temperature value has a value of 53 degrees, the electronic device may perform operation 370 because the difference between the first and second temperature values is 3 degrees, which is smaller than the second threshold of 6 degrees.

In an embodiment, although not illustrated in the drawings, when the second temperature value is larger than or equal to a predetermined value (e.g., the first threshold or another threshold), operation 370 may be performed.

According to an embodiment, in operation 350, the electronic device may cut off power to at least one component disposed in the first area. For example, when the first thermistor is a blanket thermistor, power of the HRM module disposed in the first area may be cut off. Operation 350 may include an operation of immediately terminating a function of a module having an abnormal temperature.

In an embodiment, the electronic device may cut off power to at least one component included in an area having a temperature value equal to or larger than a predetermined value. In other words, power may be cut off not only for the component disposed in the first area but also, when the temperature is higher than the predetermined temperature, for components disposed in other areas.

In an embodiment, the electronic device may transmit information regarding the heat generation state of the electronic device to the external electronic device. For example, the external electronic device may include a user terminal (e.g., when the electronic device is a smart watch, the external electronic device is a smart phone paired with the smart watch). Accordingly, the user terminal may display information indicating that the heat generation state of the electronic device is out of the normal range. Further, e.g., the external electronic device may include an external server device connected to the electronic device.

In an embodiment, the electronic device may transmit information regarding the heat generation state of the electronic device to the external electronic device in response to identifying that the electronic device is not worn by the user. Since the abnormal state of the electronic device may not be known when the user is not wearing the electronic device, the electronic device may transmit information regarding the heat generation state of the electronic device in order to transmit related information to the user terminal.

According to an embodiment, in operation 360, the electronic device may display the first user interface.

In an embodiment, the first user interface may include information indicating that power to the electronic device is to be cut off.

In an embodiment, the first user interface may include information indicating that repair or a service center visit is required because the electronic device operates abnormally.

In an embodiment, the first user interface may include an object for receiving a user input for cutting off power.

In an embodiment, although not illustrated in the drawings, the electronic device may cut off power to the electronic device after a predetermined time (e.g., 10 seconds) elapses after displaying the first user interface.

In an embodiment, when the electronic device identifies a user input through the object, power may be immediately cut off according to the identification of the user input even when a predetermined time does not elapse.

According to an embodiment, in operation 370, the electronic device may display the second user interface. The second user interface may include a user interface displayed when the heat generation state of the electronic device is a high temperature, but is not due to physical damage to internal components of the electronic device. For example, the second user interface may include the user interface 203 and/or the user interface 207 of FIG. 2. The operations according to operation 370 may include operation contents performed by the electronic device during the process of displaying the user interface 203, the user interface 205, the user interface 207, the user interface 209, the user interface 211, and the user interface 213 of FIG. 2.

In an embodiment, although not illustrated in the drawings, an external electronic device connected to the electronic device may also display a user interface (e.g., a user interface corresponding to the first user interface and a user interface corresponding to the second user interface) indicating the state of the electronic device.

FIG. 4 illustrates an operation flow of an electronic device according to an embodiment. The electronic device of FIG. 4 may include a device corresponding to the electronic device of FIGS. 1, 2, and 3. In the description of FIG. 4, descriptions overlapping those described with reference to FIGS. 1 to 3 may be omitted. FIG. 4 illustrates an operation flow of the electronic device when a low temperature larger than or equal to the normal range is detected in the electronic device.

According to an embodiment, in operation 410, the electronic device may obtain a first temperature value from the first thermistor. Operation 410 may include operation content corresponding to operation 310 of FIG. 3.

In an embodiment, when the electronic device determines in operation 320 that the first temperature value is smaller than the first threshold, the electronic device may perform operation 410.

According to an embodiment, in operation 420, the electronic device may determine whether the first temperature value is smaller than or equal to the third threshold. The third threshold may include a value for determining whether a thermistor is burned. For example, when the blanket thermistor disposed adjacent to the HRM module is burned due to continuous heat generation, the blanket thermistor may not operate normally and may transmit a value equal to or less than the third threshold (e.g., -40°C), such as -40°C, to the processor. When the temperature value transmitted by the thermistor is smaller than or equal to the third threshold, the electronic device may perform an operation for cutting off power by considering that a burn occurs in the thermistor.

In an embodiment, when determining that the first temperature value is smaller than or equal to the third threshold, the electronic device may perform operation 430. For example, when the first temperature value is -40°C, since the first temperature value is -40°C or less, which is the third threshold, operation 430 may be performed.

In an embodiment, when determining that the first temperature value is larger than the third threshold, the electronic device may perform operation 410 again. In other words, the heat generation state of the electronic device may be monitored by receiving temperature values from the thermistors included in the electronic device.

According to an embodiment, in operation 430, the electronic device may identify the second temperature value obtained from the second thermistor. Operation 430 may include an operation corresponding to operation 330 of FIG. 3.

According to an embodiment, in operation 440, the electronic device may determine whether the second temperature value is larger than the fourth threshold. Operation 440 may include operation contents for identifying whether a temperature within the normal range is detected in a thermistor other than a thermistor (first thermistor) in which a low temperature is detected among the plurality of thermistors included in the electronic device. In other words, the electronic device may determine the fourth threshold to exclude the case where the malfunction of the thermistor (first thermistor) is actually due to the external environment which is at a low temperature. For example, the fourth threshold may have a value of -20°C.

In an embodiment, when determining that the second temperature value is larger than or equal to the fourth threshold, the electronic device may perform operation 450.

In an embodiment, when determining that the second temperature value is smaller than the fourth threshold, the electronic device may perform operation 410. The electronic device may determine that the reason why the first thermistor is identified as being at the abnormally low temperature is due to the external environment of the actual low temperature and not due to the burn of the first thermistor.

According to an embodiment, in operation 450, the electronic device may cut off power to at least one component disposed in the first area. Operation 450 may include operation content corresponding to operation 350 of FIG. 3.

According to an embodiment, in operation 460, the electronic device may display the first user interface. Operation 460 may include operation content corresponding to operation 360 of FIG. 3.

In an embodiment, although not illustrated in the drawings, when identifying that the electronic device is not worn on the user's body, the electronic device may transmit information about the state abnormality of the electronic device to the user terminal (e.g., a smartphone) or an external server connected to the electronic device.

In an embodiment, the first user interface may include information indicating that power to the electronic device is to be cut off.

In an embodiment, the first user interface may include information indicating that repair or a service center visit is required because the electronic device operates abnormally.

In an embodiment, the first user interface may include an object for receiving a user input for cutting off power.

In an embodiment, although not illustrated in the drawings, the electronic device may cut off power to the electronic device after a predetermined time elapses after displaying the first user interface.

In an embodiment, when the electronic device identifies a user input through the object, power may be immediately cut off according to the identification of the user input even when a predetermined time does not elapse.

In an embodiment, although not illustrated in the drawings, an external electronic device (e.g., a smartphone) connected to the electronic device may also display a user interface (e.g., a user interface corresponding to the first user interface and a user interface corresponding to the second user interface) indicating the state of the electronic device.

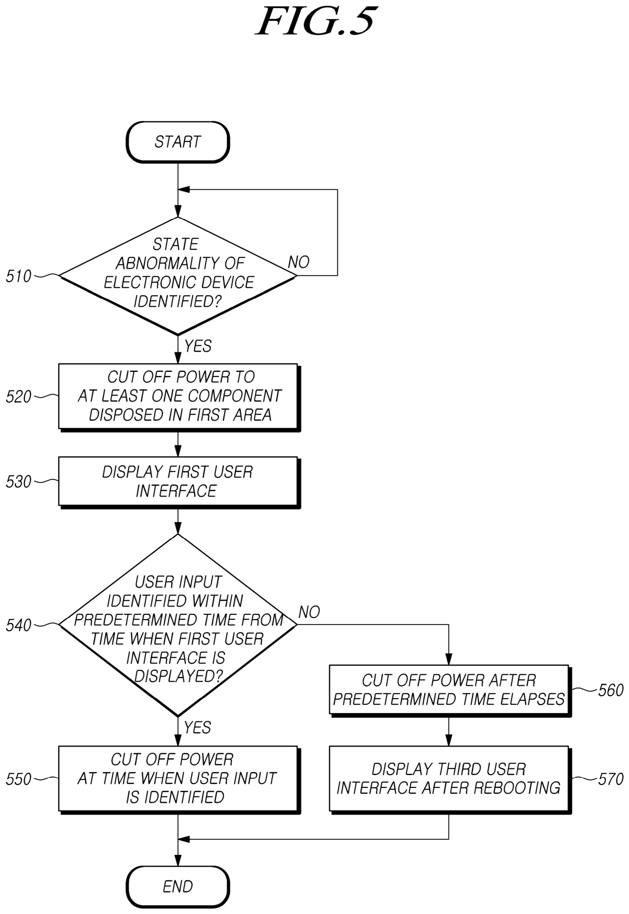

FIG. 5 illustrates an operation flow for cutting off power to an electronic device according to an embodiment. The electronic device of FIG. 5 may include a device corresponding to the electronic device of FIGS. 1 to 4. In the description of FIG. 5, descriptions overlapping those described with reference to FIGS. 1 to 4 may be omitted. Referring to FIG. 5, operation contents performed when the state abnormality of the electronic device is identified through the operations of FIGS. 3 and 4 may be included.

According to an embodiment, in operation 510, the electronic device may determine whether a state abnormality of the electronic device is identified. The state abnormality of the electronic device may include a case in which physical damage (e.g., corrosion, etc.) or burn damage occurs in at least one of the plurality of thermistors included in the electronic device.

In an embodiment, when the electronic device determines that the first temperature value is larger than or equal to the second threshold as a result of performing operations 310 to 340 of FIG. 3, it may be determined that a state abnormality is identified in the electronic device.

In an embodiment, when the electronic device determines that the second temperature value is equal to or larger than the fourth threshold as a result of performing operations 410 to 440 of FIG. 4, it may be determined that a state abnormality is identified in the electronic device.

In an embodiment, when a temperature increase of a predetermined temperature value (e.g., 5°C) or more is identified for a predetermined period (e.g., 1 minute), the electronic device may determine that a state abnormality is identified in the electronic device. The predetermined period may have a value larger than a period in which each thermistor transmits a temperature value to a processor (e.g., the processor 120). For example, when the period in which a thermistor transmits the temperature value to the processor is 20 seconds, the predetermined period may have a value of 30 seconds. For example, when the period for the thermistor to transmit the temperature value to the processor is 20 seconds, the predetermined period may be an integer multiple of 20 seconds, such as 40 seconds or 60 seconds.

According to an embodiment, in operation 520, the electronic device may cut off power to at least one component disposed in the first area. In an embodiment, operation 520 may include operation content corresponding to operation 350 of FIG. 3 and operation 450 of FIG. 4.

According to an embodiment, in operation 530, the electronic device may display the first user interface. In an embodiment, operation 530 may include operation content corresponding to operation 360 of FIG. 3 and operation 460 of FIG. 4.

In an embodiment, although not illustrated in the drawings, when identifying that the electronic device is not worn on the user's body, the electronic device may transmit information about the state abnormality of the electronic device to the user terminal (e.g., a smartphone) or an external server connected to the electronic device.

According to an embodiment, in operation 540, the electronic device may determine whether to identify a user input within a predetermined time from the time when the first user interface is displayed.

In an embodiment, the first user interface may include an object for identifying a user input for cutting off power.

In an embodiment, the first user interface may include information indicating that a state abnormality is present in the electronic device.

In an embodiment, the electronic device may identify a user input through the object.

In an embodiment, when a user input is identified within the predetermined time from the time when the first user interface is displayed, the electronic device may perform operation 550. Even if there is no user input for the user to cut off power because the electronic device has a state abnormality, the electronic device may determine whether a user input is identified for a predetermined time to prevent a burn by forcibly cutting off the power after a predetermined time.

In an embodiment, when a user input is not identified within the predetermined time from the time when the first user interface is displayed, the electronic device may perform operation 560.

According to an embodiment, in operation 550, the electronic device may cut off power at the time when a user input is identified through the object. In other words, the electronic device may cut off power in response to identifying a user input even before the predetermined time elapses.

According to an embodiment, in operation 560, when a predetermined time elapses, the electronic device may cut off power to the electronic device. Even when a user input is not identified within the predetermined time from the time when the first user interface is displayed, the electronic device may cut off power to the electronic device when a predetermined time elapses from the time when the first user interface is displayed.

According to an embodiment, in operation 570, the electronic device may display the third user interface after rebooting. The third user interface may include a user interface displayed to indicate that the electronic device is forcibly shut down due to a state abnormality when a reboot is identified after the electronic device is forcibly shut down according to operation 560.

In an embodiment, the third user interface may be maintained until a user input indicating that the user has identified the state abnormality of the electronic device is identified. For example, the third user interface may include an object for receiving a user input indicating that the user has identified the state abnormality of the electronic device. Unless a user input is identified through the object, the electronic device may maintain the display.

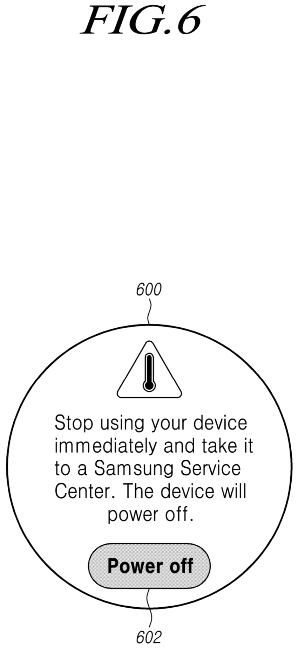

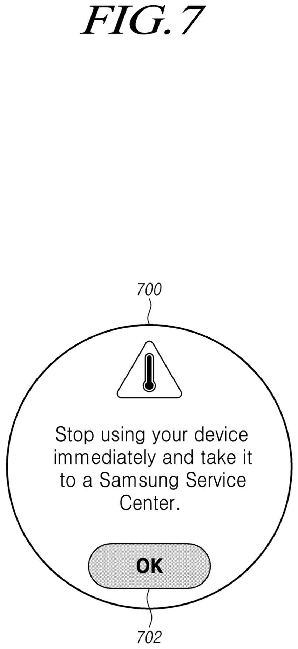

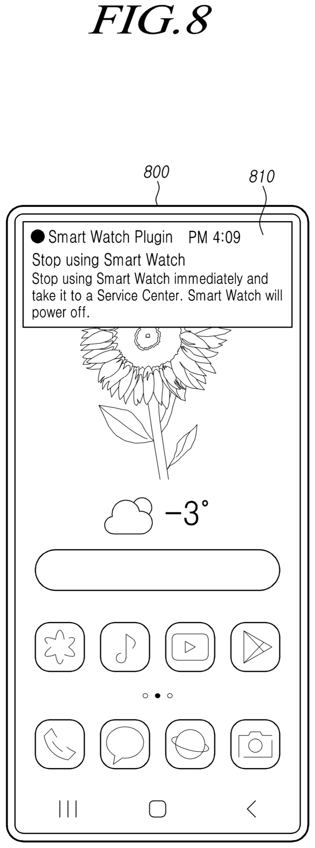

FIG. 6 illustrates an example of a user interface displayed on an electronic device according to an embodiment. FIG. 7 illustrates an example of a user interface displayed on an electronic device according to an embodiment. FIG. 8 illustrates an example of a user interface displayed on an external electronic device according to an embodiment.

FIG. 6 illustrates a user interface 600 as an example of the first user interface (e.g., the first user interface of FIGS. 3 and 4).

In an embodiment, the user interface 600 may include information indicating that a repair or a service center visit is required because a state abnormality occurs in the electronic device.

In an embodiment, the user interface 600 may include information indicating that power to the electronic device is to be cut off.

In an embodiment, the user interface 600 may include an object 602 for receiving a user input for immediately cutting off power.

In an embodiment, when identifying a user input through the object 602, the electronic device may immediately cut off power to the electronic device in response to identifying a user input.

FIG. 7 illustrates a user interface 700 as an example of the second user interface (e.g., the second user interface of FIG. 3).

In an embodiment, the user interface 700 may include information indicating that a state abnormality is present in the electronic device.

In an embodiment, the user interface 700 may include an object 702 for receiving a user input indicating that the user has identified the state abnormality of the electronic device.

In an embodiment, when a user input is identified through the object 702, the display of the user interface 700 may be released.

Referring to FIG. 8, the external electronic device may display a user interface 800. The external electronic device may include a device such as a smartphone connected to the smart watch.

In an embodiment, a user interface 800 may include an object indicating that a state abnormality is present in an electronic device (e.g., a smart watch). For example, as illustrated in FIG. 8, the external electronic device may display a pop-up window 810. The pop-up window 810 may include information indicating that an abnormality occurs in the electronic device and power to the electronic device is to be cut off.

Through the above-described operations of the electronic device, a heat generation accident due to physical damage or burn of internal components of the electronic device may be prevented.

An electronic device 101 according to an embodiment of the disclosure may comprise a first thermistor measuring a temperature of a first area of the electronic device. The electronic device according to an embodiment may comprise a second thermistor measuring a temperature of a second area of the electronic device. The electronic device according to an embodiment may comprise at least one processor 120 electrically connected to the first thermistor and the second thermistor and including a processing circuit. The at least one processor according to an embodiment may individually and/or collectively obtain a first temperature value from the first thermistor. The at least one processor according to an embodiment may individually and/or collectively determine whether the first temperature value is a first threshold or more. The at least one processor according to an embodiment may individually and/or collectively identify a second temperature value obtained from the second thermistor in response to determining that the first temperature value is the first threshold or more. The at least one processor according to an embodiment may individually and/or collectively determine whether the first temperature value is larger than the second temperature value by a second threshold or more. The at least one processor according to an embodiment may individually and/or collectively cut off power to at least one component disposed in the first area in response to determining that the first temperature value is larger than the second temperature value by the second threshold or more. The at least one processor according to an embodiment may individually and/or collectively display a user interface indicating that an operation of the electronic device is to be stopped. In an embodiment, the user interface may include an object for cutting off power to the electronic device.

The at least one processor according to an embodiment may individually and/or collectively cut off power to the electronic device at a time of identifying a user input when identifying the user input through the object before a predetermined time elapses from a time of displaying the user interface.

The at least one processor according to an embodiment may individually and/or collectively cut off power to the electronic device when identifying that a predetermined time elapses from a time of displaying the user interface.

The at least one processor according to an embodiment may individually and/or collectively the user interface is configured to be displayed when identifying that the first temperature value is a third threshold or less, and the second temperature value is a fourth threshold or more.

The at least one processor according to an embodiment may individually and/or collectively display the user interface when identifying that the first temperature value increases by a fifth threshold or more during a predetermined time.

The electronic device according to an embodiment may comprise a communication module. The at least one processor according to an embodiment may individually and/or collectively transmit information regarding a state of the electronic device to an external electronic device connected to the electronic device through the communication module in response to displaying the user interface.

The at least one processor according to an embodiment may individually and/or collectively identify that the electronic device is rebooted. The at least one processor according to an embodiment may individually and/or collectively display information indicating that the electronic device is shut down.

The electronic device according to an embodiment may comprise a third thermistor measuring a temperature value of a third area of the electronic device. The at least one processor according to an embodiment may individually and/or collectively obtain a third temperature value from the third thermistor. The at least one processor according to an embodiment may individually and/or collectively determine whether the first temperature value is larger than an average of the second temperature value and the third temperature value by a sixth threshold or more. The at least one processor according to an embodiment may individually and/or collectively cut off power to the at least one component disposed in the first area when determining that the first temperature value is larger than the average by the sixth threshold or more.

The at least one processor according to an embodiment may individually and/or collectively cut off power to one or more components included in one or more areas having a temperature value larger than a seventh temperature value inside the electronic device in response to determining that the first temperature value is larger than the second temperature value by the second threshold.

The electronic device according to an embodiment may comprise a heart rate monitor HRM module. In an embodiment, the HRM module may be disposed in the first area. In an embodiment, the at least one processor may be disposed in the second area.

A method for operating an electronic device 101 according to an embodiment of the disclosure may comprise obtaining a first temperature value from a first thermistor measuring a temperature of a first area of the electronic device. The operation method of the electronic device according to an embodiment may comprise determining whether the first temperature value is a first threshold or more. The operation method of the electronic device according to an embodiment may comprise identifying a second temperature value obtained from a second thermistor measuring a temperature of a second area of the electronic device in response to determining that the first temperature value is the first threshold or more. The operation method of the electronic device according to an embodiment may comprise determining whether the first temperature value is larger than the second temperature value by a second threshold or more. The operation method of the electronic device according to an embodiment may comprise cutting off power to at least one component disposed in the first area in response to determining that the first temperature value is larger than the second temperature value by the second threshold or more. The operation method of the electronic device according to an embodiment may comprise displaying a user interface indicating that an operation of the electronic device is to be stopped. In an embodiment, the user interface may include an object for cutting off power to the electronic device.

The operation method of the electronic device according to an embodiment may comprise cutting off power to the electronic device at a time of identifying a user input when identifying the user input through the object before a predetermined time elapses from a time of displaying the user interface.

The operation method of the electronic device according to an embodiment may comprise cutting off power to the electronic device when a predetermined time elapses from a time of displaying the user interface.

The operation method of the electronic device according to an embodiment may comprise displaying the user interface when identifying that the first temperature value is a third threshold or less, and the second temperature value is a fourth threshold or more.

The operation method of the electronic device according to an embodiment may comprise displaying the user interface when identifying that the first temperature value increases by a fifth threshold or more during a predetermined time.

The operation method of the electronic device according to an embodiment may comprise transmitting information regarding a state of the electronic device to an external electronic device connected to the electronic device in response to displaying the user interface.

The operation method of the electronic device according to an embodiment may comprise identifying that the electronic device is rebooted. The operation method of the electronic device according to an embodiment may comprise displaying information indicating that the electronic device is shut down.

The operation method of the electronic device according to an embodiment may comprise obtaining a third temperature value from a third thermistor measuring a temperature value of a third area of the electronic device. The operation method of the electronic device according to an embodiment may comprise determining whether the first temperature value is larger than an average of the second temperature value and the third temperature value by a sixth threshold or more. The operation method of the electronic device according to an embodiment may comprise cutting off power to the at least one component disposed in the first area when determining that the first temperature value is larger than the average by the sixth threshold or more.

The operation method of the electronic device according to an embodiment may comprise cutting off power to one or more components included in one or more areas having a temperature value larger than a seventh temperature value inside the electronic device in response to determining that the first temperature value is larger than the second temperature value by the second threshold.

In an embodiment, the at least one component may include a heart rate monitor (HRM) module.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a first thermistor measuring a temperature of a first area of the electronic device;
a second thermistor measuring a temperature of a second area of the electronic device; and
at least one processor (120) electrically connected to the first thermistor and the second thermistor and including a processing circuit, wherein the at least one processor is configured to individually and/or collectively:
obtain a first temperature value from the first thermistor;
determine whether the first temperature value is a first threshold or more;
identify a second temperature value obtained from the second thermistor in response to determining that the first temperature value is the first threshold or more;
determine whether the first temperature value is larger than the second temperature value by a second threshold or more;
cut off power to at least one component disposed in the first area in response to determining that the first temperature value is larger than the second temperature value by the second threshold or more; and
display a user interface indicating that an operation of the electronic device is to be stopped, and
wherein the user interface includes an object for cutting off power to the electronic device.

2. The electronic device of claim 1, wherein the at least one processor is configured to individually and/or collectively:
cut off power to the electronic device at a time of identifying a user input when identifying the user input through the object before a predetermined time elapses from a time of displaying the user interface.

3. The electronic device of claim 1 or 2, wherein the at least one processor is configured to individually and/or collectively:
cut off power to the electronic device when identifying that a predetermined time elapses from a time of displaying the user interface.

4. The electronic device of any one of claims 1 to 3, wherein the user interface is configured to be displayed when identifying that the first temperature value is a third threshold or less, and the second temperature value is a fourth threshold or more.

5. The electronic device of any one of claims 1 to 3, wherein the at least one processor is configured to individually and/or collectively:
display the user interface when identifying that the first temperature value increases by a fifth threshold or more during a predetermined time.

6. The electronic device of any one of claims 1 to 5, comprising a communication module, wherein the at least one processor is configured to individually and/or collectively:
transmit information regarding a state of the electronic device to an external electronic device connected to the electronic device through the communication module in response to displaying the user interface.

7. The electronic device of claim 3, wherein the at least one processor is configured to individually and/or collectively:
identify that the electronic device is rebooted; and
display information indicating that the electronic device is shut down.

8. The electronic device of claim 2, comprising a third thermistor measuring a temperature value of a third area of the electronic device, wherein the at least one processor is configured to individually and/or collectively:
obtain a third temperature value from the third thermistor;
determine whether the first temperature value is larger than an average of the second temperature value and the third temperature value by a sixth threshold or more; and
cut off power to the at least one component disposed in the first area when determining that the first temperature value is larger than the average by the sixth threshold or more.

9. The electronic device of claim 1, wherein the at least one processor is configured to individually and/or collectively:
cut off power to one or more components included in one or more areas having a temperature value larger than a seventh temperature value inside the electronic device in response to determining that the first temperature value is larger than the second temperature value by the second threshold.

10. The electronic device of claim 1, comprising a heart rate monitor (HRM) module,
wherein the HRM module is disposed in the first area, and
wherein the at least one processor is disposed in the second area.

11. A method for operating an electronic device (101), the method comprising:
obtaining a first temperature value from a first thermistor measuring a temperature of a first area of the electronic device;
determining whether the first temperature value is a first threshold or more;
identifying a second temperature value obtained from a second thermistor measuring a temperature of a second area of the electronic device in response to determining that the first temperature value is the first threshold or more;
determining whether the first temperature value is larger than the second temperature value by a second threshold or more;
cutting off power to at least one component disposed in the first area in response to determining that the first temperature value is larger than the second temperature value by the second threshold or more; and
displaying a user interface indicating that an operation of the electronic device is to be stopped,
wherein the user interface includes an object for cutting off power to the electronic device.

12. The method of claim 11, comprising cutting off power to the electronic device at a time of identifying a user input when identifying the user input through the object before a predetermined time elapses from a time of displaying the user interface.

13. The method of claim 11 or 12, comprising cutting off power to the electronic device when a predetermined time elapses from a time of displaying the user interface.

14. The method of any one of claims 11 to 13, comprising displaying the user interface when identifying that the first temperature value is a third threshold or less, and the second temperature value is a fourth threshold or more.

15. The method of any one of claims 11 to 13, comprising displaying the user interface when identifying that the first temperature value increases by a fifth threshold or more during a predetermined time.
